# EUROPÄISCHE PATENTSCHRIFT

(11) **EP 0 535 058 B1**
(45) Veröffentlichungstag und Bekanntmachung des Hinweises auf die Patenterteilung: **07.09.1994**
(21) Anmeldenummer: 91911212.8
(22) Anmeldetag: 15.06.1991
(51) Int. Cl.: B60K 17/35

(54) **ALLRADANTRIEB FÜR EIN KRAFTFAHRZEUG**
ALL-WHEEL DRIVE FOR A MOTOR VEHICLE
DISPOSITIF DE TRACTION TOUTES ROUES POUR UN VEHICULE AUTOMOBILE

(30) Priorität: 21.06.1990 DE 4019764
(43) Veröffentlichungstag der Anmeldung: 07.04.1993
(73) Patentinhaber: Dr.Ing.h.c. F. Porsche Aktiengesellschaft, 70435 Stuttgart (DE)
(72) Erfinder: MÜLLER, Robert, D-7251 Mönsheim (DE)
(86) Internationale Anmeldenummer: EP9101113
(87) Internationale Veröffentlichungsnummer: WO9119620

(56) Entgegenhaltungen:
- EP-A- 0 352 994
- DE-C- 3 507 490
- GB-A- 2 108 221
- US-A- 4 367 661

## Beschreibung

Die Erfindung betrifft einen Allradantrieb für ein Kraftfahrzeug nach dem Oberbegriff des Anspruchs 1.

Ein ähnlicher Allradantrieb ist in DE-PS 35 07 490 beschrieben. Von einem mit Frontmotor starr angetriebenen Antriebsstrang zur Vorderachse zweigt ein Antriebsstrang zur Hinterachse ab, der über ein Allrad-Sperrsystem zuschaltbar ist. Das dabei verwendete Sperrsystem besteht aus einem den direkten Durchtrieb vermittelnden Planetengetriebe und einer an dessen Planetenträger angreifenden Fliehkraftbremse. Am Planetengetriebe weicht die Übersetzung von der Eingangswelle zur Ausgangswelle nur geringfügig von 1 : 1 ab, die Übersetzung von der Eingangswelle zum Planetenträger ist aber sehr hoch, z.B. 16 : 1. Das Planetengetriebe ist zusammengesetzt aus einem mit der Eingangswelle drehfesten Eingangssonnenrad, einem koaxial daneben gelagerten, mit der Ausgangswelle verbundenen Ausgangssonnenrad etwas geringerer Zähnezahl sowie aus den mit beiden Sonnenrädern zugleich in Eingriff stehenden Planetenrädern, die am Planetenträger gelagert sind. Am Planetenträger sind Lagerbolzen angebracht, auf denen Bremsbacken so gelagert sind, daß sie als Fliehkraftgewichte wirksam sind und sich mit ihren Bremsbelägen an eine feststehende Bremstrommel anlegen können. Bei Auftreten einer Drehzahldifferenz zwischen Vorderachse und Hinterachse wird so ein mit der Drehzahldifferenz progressiv ansteigendes Sperrmoment erzeugt, das eine optimale Traktion des Kraftfahrzeugs erbringt. Darüber hinaus treten aber bei neu zu entwickelnden Kraftfahrzeugen immer mehr die Forderungen nach Fahrstabilität, ABS-Tauglichkeit und allgemein die Fahrsicherheit auch in Grenzsituationen in den Vordergrund.

Es ist die Aufgabe der Erfindung, einen Allrad-Antrieb zu schaffen, der es gestattet, bei Bremsvorgängen, bei Kurvenfahrt und beim Anfahren und Beschleunigen des Kraftfahrzeuges ein optimales fahrdynamisches Verhalten zu realisieren.

Zur Lösung dieser Aufgabe dienen die kennzeichnenden Merkmale des Anspruchs 1.

Wenn in einen ersten Antriebsstrang zur Hinterachse nach der Abzweigstelle zum zweiten, zur Vorderachse führenden Antriebsstrang eine schaltbare Trennkupplung eingesetzt ist, wird es möglich, durch Öffnen der Trennkupplung die Hinterachse völlig von der Vorderachse und vom Schleppmoment des Motors abzutrennen. Diese Abtrennung erfolgt bei Betätigen der Fahrzeugbremse gesteuert vom ABS-Signal in ca. 130 ms. Somit ist eine optimale ABS-Kompatibilität und Fahrstabilität erreicht. Im Schubbetrieb des Kraftfahrzeugs öffnet die Trennkupplung nicht, so daß eine Motorbremsung auf alle 4 Räder erfolgen kann.

Weitere, die Erfindung ausgestaltende Merkmale enthalten die Unteransprüche.

Ein Ausführungsbeispiel der Erfindung ist in den Zeichnungen dargestellt und wird nachfolgend erläutert.

Es zeigen:

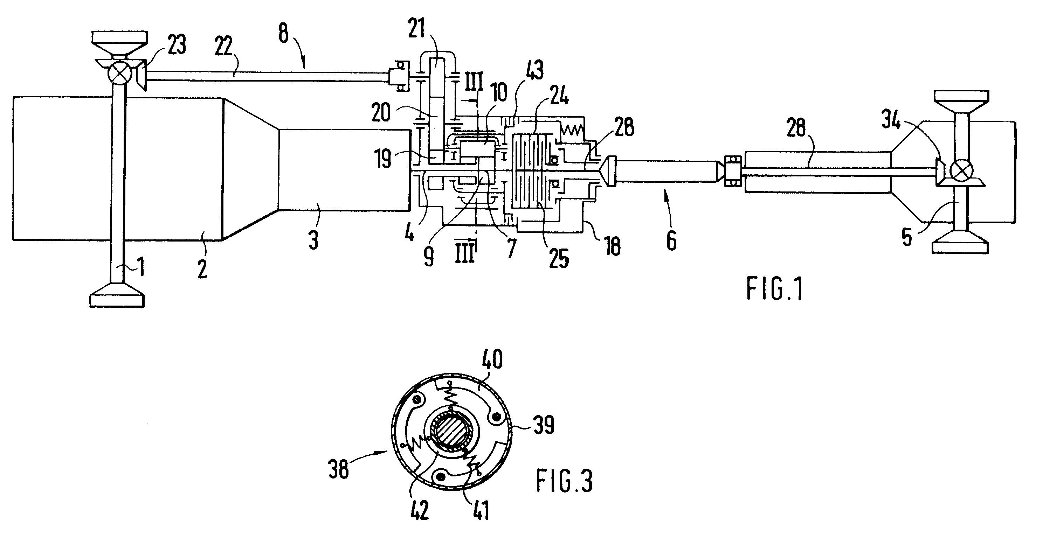

- Fig. 1: Allrad- Antriebsschema eines Kraftfahrzeugs,

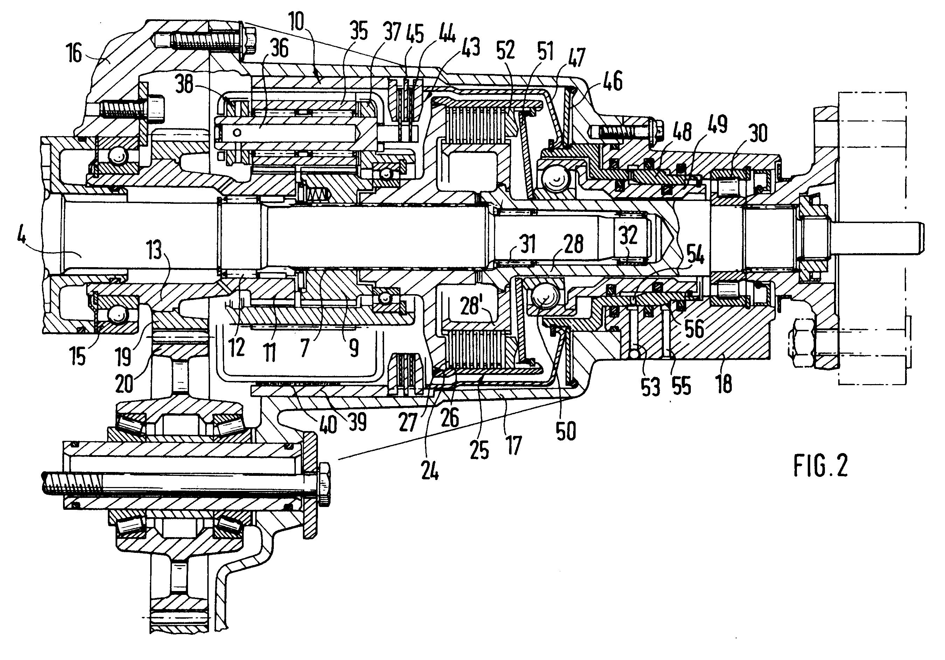

- Fig. 2: Längsschnitt durch die Antriebsstränge zur Vorderachse und Hinterachse,
- Fig. 3: Fliehkraftbremse des Planetenrad- Sperrsystems.
- Fig. 4: Längsschnitt durch eine andere Ausführungsform der Antriebsstränge.

Ein nahe der Vorderachse 1 an einem Kraftfahrzeug angeordneter Motor 2 treibt über ein Gangschaltgetriebe 3 und eine Antriebswelle 4 einen zur Hinterachse 5 führenden ersten Antriebsstrang 6 und einen an einer Abzweigstelle 7 an ihn angeschlossenen Antriebsstrang 8 zur Vorderachse an. Als Abzweigstelle 7 dient eine Kerbzahnverbindung, mit der ein Eingangssonnenrad 9 eines Planetenrad-Sperrsystems 10 auf der Antriebswelle 4 drehfest ist. Koaxial zum Eingangssonnenrad 9 ist neben ihm ein Ausgangssonnenrad 11 etwas geringerer Zähnezahl auf der Antriebswelle 4 mit einem Nadellager 12 gelagert. Das Ausgangssonnenrad 11 ist einstückig mit einer hohlen Ausgangswelle 13 ausgebildet, die an ihrer Außenseite mit einem Kugellager 15 in einem vorderen Lagergehäuse 16 gelagert ist. Das Lagergehäuse 16, ein Sperrengehäuse 17 und ein Hydraulikgehäuse 18 bilden zusammen ein die Allrad-Antriebsvorrichtung umschließendes Gehäuse, wobei die drei Gehäuseteile 16, 17, 18 zueinander zentriert und abgedichtet aneinander befestigt sind. Etwa mittig zwischen dem Nadellager 12 und und dem Kugellager 15 ist auf der Ausgangswelle 13 ein Zahnrad 19 befestigt, das über ein Zwischenrad 20 ein Zahnrad 21 einer Abtriebswelle 22 antreibt, die über einen Kegelrad-Winkeltrieb 23 die Vorderachse 1 treibt.

An dem hinter der Abzweigstelle 7 gelegenen Wellenstück der Antriebswelle 4 ist mittels einer Kerbzahnverbindung ein Kupplungsgehäuse 24 drehfest, das eine Trennkupplung 25 für den ersten Antriebsstrang 6 umschließt. Im Kupplungsgehäuse 24 sind Außenlamellen 26 drehfest und längsverschieblich. Sie wirken mit Innenlamellen 27 zusammen, die auf einem mit der Abtriebswelle 28 zur Hinterachse 5 verbundenen Lamellenträger 28' drehfest sind. Die Abtriebswelle 28 ist hohl ausgebildet und in Lagern 29, 30 des Hydraulikgehäuses 18 gelagert. In der Abtriebswelle 28 ist die Antriebswelle 4 mit zwei Nadellagern 31, 32 gelagert. Die Abtriebswelle 28 treibt über eine Gelenkwelle 33 und einen Kegelrad- Winkeltrieb 34 die Hinterachse 5 an.

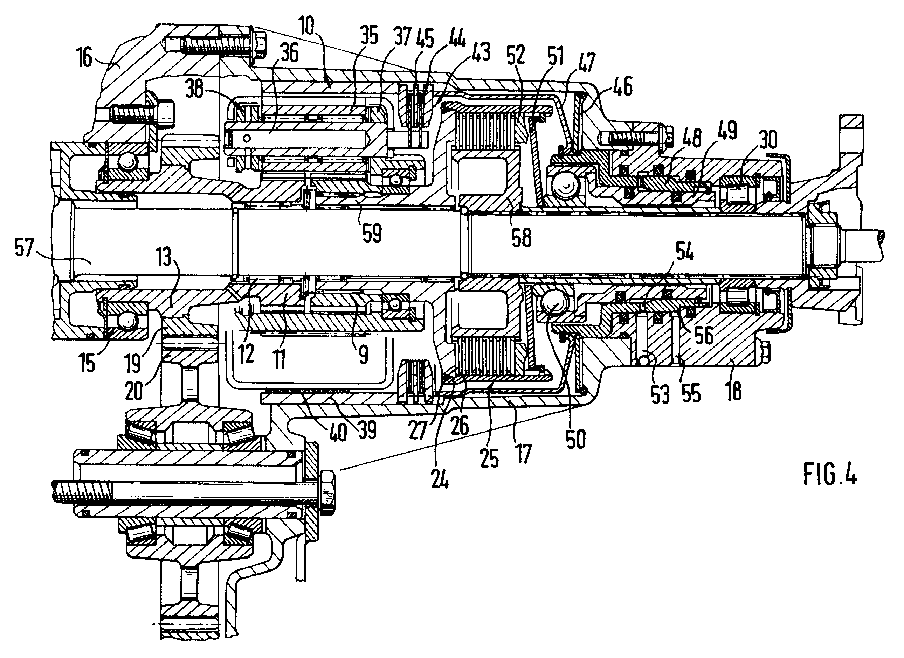

Mit dem Eingangssonnenrad 9 und dem Ausgangssonnenrad 11 stehen drei Planetenräder 35 in Eingriff, die an Lagerbolzen 36 des Planetenträgers 37 gelagert sind. An den einen Enden der Lagerbolzen 36 ist eine Fliehkraftbremse 38 angebracht, die in Fig. 3 näher dargestellt ist. An eine feststehende Bremstrommel 39 des Sperrengehäuses 17 werden die mit dem Planetenträger 37 rotierenden, auf den Lagerbolzen 36 schwenkbaren Bremsbacken 40 durch Fliehkraft angedrückt. Der Fliehkraft entgegen wirken Zugfedern 41, mit denen die Bremsbacken 40 an eine zentrale, hohl gebohrte, mit dem Planetenträger 37 umlaufenden Bremswelle 42 angehängt sind.

Das Eingangssonnenrad hat eine Zähnezahl Z = 47, das Ausgangssonnenrad eine Zähnezahl Z = 44. Die Übersetzung vom Eingangssonnenrad zum Planetenträger beträgt 15 2/3 : 1. Tritt ein Drehzahlunterschied zwischen der Antriebswelle 4 und der Ausgangswelle 13 auf, so werden der Planetenträger 37 und die Bremsbacken 40 mit der Übersetzung 15 2/3 zur Differenzdrehzahl in Umdrehung versetzt. Die Bremsbacken 40 bauen ein mit der Drehzahldifferenz proportional ansteigendes Sperrmoment auf.

An den anderen Enden der Lagerbolzen 36 befindet sich eine Sperrkupplung 43, um bei bestimmten Fahrsituationen das Umlaufen des Planetenträgers 37 zu verhindern und eine starre Antriebsverbindung zwischen Vorderachse 1 und Hinterachse 5 zu realisieren. An den Lagerbolzen 36 sind Innenlamellen 44 befestigt; sie wirken mit Außenlamellen 45 des Sperrengehäuses 17 zusammen. Durch eine Tellerfeder 46, die sich zwischen dem Hydraulikgehäuse 18 und einer Betätigungsglocke 47 abstützt, wird die Sperrkupplung 43 geschlossen. Geöffnet wird sie entgegen der Kraft der Tellerfeder 46 mit einem im Hydraulikgehäuse 18 längsgeführten, äußeren Hydraulikkolben 48. Ein in ihm geführter, innerer Hydraulikkolben 49 betätigt über ein Einrücklager 50 eine Tellerfeder 51 und ein Druckstück 52 die Trennkupplung 25. Die Sperrkupplung 43 ist drucklos durch Federkraft geschlossen, die Trennkupplung 25 ist drucklos offen.

Bei normalem Betriebszustand wird über den Druckanschluß 53 und radiale Kanäle 54 der innere Hydraulikkolben 49 nach links, der äußere Hydraulikkolben 48 nach rechts verschoben, so daß die Trennkupplung 25 geschlossen und somit der Kraftfluß zur Hinterachse hergestellt ist. Gleichzeitig wird mit dem äußeren Hydraulikkolben 48 die Sperrkupplung 43 gelöst und somit der Planetenträger 35 des Allrad-Sperrsystems freigegeben.

Bei ABS-Betrieb sowie beim Abschleppen und bei Leistungsprüfungen des Kraftfharzeugs ist der Druckanschluß 53 drucklos, die Trennkupplung 25 ist offen, die Sperrkupplung 45 geschlossen. Somit ist die Hinterachse 5 abgetrennt, die Vorderachse 1 ist starr an den Motor 2 gekoppelt.

Wird gleichzeitig mit der Druckbeaufschlagung des Druckanschlusses 53 dem Druckanschluß 55 derselbe Druck zugeführt, wird der äußere Hydraulikkolben 48 über seine größere äußere Angriffsfläche 56 nach links verschoben. Die Sperrkupplung 43 wird geschlossen, ohne daß die Hinterachse 5 abgekoppelt wird. Hier liegt starrer Antrieb zur Vorderachse 1 und zur Hinterachse 5 vor.

In einer abgewandelten Ausführungsform der Erfindung nach Fig. 4 durchdringt eine zentrische Antriebswelle 57 den Allradantrieb und bildet einen starren Antrieb zur Hinterachse 5. Der Lamellenträger 58 der Trennkupplung 25 ist auf der Antriebswelle 57 drehfest, das Kupplungsgehäuse 24 der Trennkupplung 25 ist auf der Antriebswelle 57 gelagert. Auf einem Fortsatz 59 des Kupplungsgehäuses 24 ist das Eingangssonnenrad 9 des Planetenrad-Sperrsystems 10 drehfest. Alle übrigen Teile sind gleich ausgebildet und angeordnet wie bei der oben beschriebenen ersten Ausführungsform der Erfindung.

Wird die Trennkupplung 25 geschlossen, so ist zusätzlich zur Hinterachse 5 auch die Vorderachse 1 in Wirkbereitschaft. Sie wird zugeschaltet, sobald eine bestimmte Drehzahldifferenz zwischen Hinterachse 5 und Vorderachse 1 auftritt. Mit Hilfe des verwendeten Planetenrad-Sperrsystems 10 läßt sich eine quadratisch ansteigende Sperrmoment-Drehzahldifferenz-Kennlinie erzeugen.

## Patentansprüche

1. Allradantrieb für ein Kraftfahrzeug, mit einem vom Gangschaltgetriebe ausgehenden, ersten Antriebsstrang zu einer ersten Fahrzeugachse und einem vom ersten Antriebsstrang abzweigenden, zweiten Antriebsstrang zur zweiten Fahrzeugachse, dadurch gekennzeichnet, daß der zweite Antriebsstrang (8) über ein permanent wirkbereites Allrad-Sperrsystem (10) in Abhängigkeit der Drehzahldifferenz zwischen einer Antriebswelle (4) und einer Ausgangswelle (13) zuschaltbar ist, wobei das Allrad-Sperrsystem (10) durch eine schaltbare Sperrkupplung (43) so blockierbar ist, daß mit dem zweiten Antriebsstrang (8) die zweite Fahrzeugachse (1) starr angetrieben wird und daß in den ersten Antriebsstrang (6) kraftflußmäßig hinter der Abzweigstelle (7) zum zweiten Antriebsstrang (8) eine schaltbare Trennkupplung (25) eingesetzt ist.

2. Allradantrieb für ein Kraftfahrzeug, mit einem vom Gangschaltgetriebe ausgehenden, ersten Antriebsstrang zu einer ersten Fahrzeugachse und einem vom ersten Antriebsstrang abzweigenden, zweiten Antriebsstrang zur zweiten Fahrzeugachse, dadurch gekennzeichnet, daß der erste Antriebsstrang starr als durchgehende Antriebswelle (57) ausgebildet ist, und daß in dem zweiten Antriebsstrang (8) eine schaltbare Trennkupplung (25) und ein permanent wirkbereites Allrad-Sperrsystem hintereinander liegen, über das in Abhängigkeit der Drehzahldifferenz zwischen einer Antriebswelle (4) und einer Ausgangswelle (13) die zweite Fahrzeugachse zuschaltbar ist, wobei das Allrad-Sperrsystem (10) durch eine schaltbare Sperrkupplung (43) so blockierbar ist, daß mit dem zweiten Antriebsstrang (8) die zweite Fahrzeugachse (1) starr angetrieben wird.

3. Allradantrieb nach Anspruch 1 oder 2, dadurch gekennzeichnet, daß für die Trennkupplung (25) und die Sperrkupplung (43) hydraulische Betätigungsvorrichtungen (48, 49) vorgesehen sind, die von außen in Abhängigkeit von Kenngrößen des Kraftfahrzeugs ansteuerbar sind.

4. Allradantrieb nach Anspruch 3, dadurch gekennzeichnet, daß die Trennkupplung (25) drucklos offen, die Sperrkupplung (43) drucklos geschlossen ist.

5. Allradantrieb nach Anspruch 1, dadurch gekennzeichnet, daß das Sperrsystem (10) mit Sperrkupplung (43), die Trennkupplung (25) und die Hydraulik für die Betätigungsvorrichtungen (48, 49) in dieser Reihenfolge, zueinander koaxial angeordnet und von einem feststehenden Gehäuse umschlossen sind.

6. Allradantrieb nach Anspruch 1 und 2, dadurch gekennzeichnet, daß das Sperrsystem aus einem den direkten Durchtrieb von einer Antriebswelle (4) zu einer Ausgangswelle (13) vermittelnden Planetengetriebe (10) und einer an dessen Planetenträger (37) angreifenden Bremsvorrichtung (38) besteht, wobei die Zahnradübersetzung für den Direktdurchtrieb von der Antriebswelle (4) zur Ausgangswelle (13) geringfügig von 1 : 1 abweicht, die Zahnradübersetzung von der Anriebswelle (4) zum Planetenträger (37) aber wesentlich höher ist.

7. Allradantrieb nach Anspruch 6, dadurch gekennzeichnet, daß das Planetengetriebe (10) aus einem auf einer zentralen Antriebswelle (4) drehfesten Eingangssonnenrad (9), einem neben ihm auf der Antriebswelle (4) gelagerten, mit einer hohlen Ausgangswelle (13) einstückigen Ausgangssonnenrad (11) etwas geringerer oder höherer Zähnezahl sowie aus Planetenrädern (35) gebildet ist, die zugleich mit dem Eingangs- und dem Ausgangssonnenrad in Eingriff stehen und an Lagerbolzen (36) des Planetenträgers (37) gelagert sind.

8. Allradantrieb nach Anspruch 3 bis 5, dadurch gekennzeichnet, daß die Sperrkupplung (43) aus mehreren reibschlüssig miteinander verbindbaren Innenlamellen (44) und Außenlamellen (45) besteht, wobei die Außenlamellen (45) am Kupplungsgehäuse (24), die Innenlamellen (44) am Lagerbolzen (36) des Planetenträgers (37) drehfest und längsverschieblich sind.

9. Allradantrieb nach Anspruch 1 bis 5, dadurch gekennzeichnet, daß die Trennkupplung (25) aus mehreren, reibschlüssig miteinander verbindbaren Innenlamellen (27) und Außenlamellen (26) besteht, wobei die Außenlamellen (26) an einem mit der Antriebswelle (4) verbundenen Kupplungsgehäuse (24) drehfest und längsverschieblich sind, die Innenlamellen (27) gegenüber der Abtriebswelle (28) zur Hinterachse (5) drehfest und längsverschieblich sind.

10. Allradantrieb nach Anspruch 1 oder 2, dadurch gekennzeichnet, daß die Antriebsstränge (8) bzw. (6) zur Vorderachse (1) bzw. Hinterachse (5) geringfügig unterschiedliche Gesamtübersetzungen aufweisen.

## Claims

1. An all-wheel drive for a motor vehicle, having a first drive train from the gear box to a first axle of the vehicle and a second drive train - branching off from the first drive train - to the second axle of the vehicle, **characterized in that** the second drive train (8) can be connected as a function of the difference in rotational speed between a drive shaft (4) and an output shaft (13) by way of an all-wheel locking system (10) permanently ready for operation, wherein the all-wheel locking system (10) is blockable by an engageable locking clutch (43) in such a way that the second axle (1) of the vehicle is driven rigidly by the second drive train (8), and an engageable separating clutch (25) is inserted in the first drive train (6) downstream - in the driving direction - of the branching point (7) to the second drive train (8).

2. An all-wheel drive for a motor vehicle, having a first drive train from the gear box to a first axle of the vehicle and a second drive train - branching off from the first drive train - to the second axle of the vehicle, **characterized in that** the first drive train is constructed rigidly as a through drive shaft (57), and an engageable separating clutch (25) and an all-wheel locking system permanently ready for operation are arranged one behind the other in the second drive train (8), wherein the second axle of the vehicle can be connected as a function of the difference in rotational speed between a drive shaft (4) and an output shaft (13) by way of the all-wheel locking system and wherein the all-wheel locking system (10) is blockable by an engageable locking clutch (43) in such a way that the second axle (1) of the vehicle is driven rigidly by the second drive train (8).

3. All all-wheel drive according to Claim 1 or 2, **characterized in that** hydraulic actuating devices (48, 49) are provided for the separating clutch (25) and the locking clutch (43), the hydraulic actuating devices (48, 49) being controllable from outside as a function of characteristic values of the motor vehicle.

4. All all-wheel drive according to Claim 3, **characterized in that** the separating clutch (25) without pressure is open, and the locking clutch (43) without pressure is closed.

5. All all-wheel drive according to Claim 1, **characterized in that** the locking system (10) with the locking clutch (43), the separating clutch (25) and the hydraulic system for the actuating devices (48, 49) are arranged coaxially with one another in this sequence and are surrounded by a stationary housing.

6. All all-wheel drive according to Claims 1 and 2**, characterized in that** the locking system comprises a planetary gear (10) permitting a direct through drive from a drive shaft (4) to an output shaft (13), and a braking device (38) engaging on the planetary-gear carrier (37) thereof, wherein the gearwheel ratio for the direct through drive from the drive shaft (4) to the output shaft (13) deviates slightly from 1 : 1, while the gearwheel ratio from the drive shaft (4) to the planetary-gear carrier (37) is considerably higher.

7. All all-wheel drive according to Claim 6, **characterized in that** the planetary gear (10) is formed by an input sun wheel (9) rotationally fixed on a central drive shaft (4), an output sun wheel (11) mounted adjacent thereto on the drive shaft (4) and integral with a hollow output shaft (13) and having a somewhat smaller or greater number of teeth, and planetary gears (35) engaging simultaneously with the input and output sun wheels and mounted on bearing pins (36) of the planetary-gear carrier (37).

8. All all-wheel drive according to Claims 3 to 5, **characterized in that** the locking clutch (43) comprises a plurality of inner discs (44) and outer discs (45) connectable to one another with non-positive locking, wherein the outer discs (45) are rotationally fixed and longitudinally displaceable on the clutch housing (24), and the inner discs (44) are rotationally fixed and longitudinally displaceable on the bearing pin (36) of the planetary-gear carrier (37).

9. All all-wheel drive according to Claims 1 to 5, **characterized in that** the separating clutch (25) comprises a plurality of inner discs (27) and outer discs (26) connectable to one another with non-positive locking, wherein the outer discs (26) are rotationally fixed and longitudinally displaceable on a clutch housing (24) connected to the drive shaft (4), and the inner discs (27) are rotationally fixed and longitudinally displaceable with respect to the driven shaft (28) to the rear axle (5).

10. All all-wheel drive according to Claim 1 or 2, **characterized in that** the respective drive trains (8) and (6) to the front axle (1) and the rear axle (5) have slightly different total gear ratios.

## Revendications

1. Dispositif de transmission intégrale pour un véhicule automobile, comportant une première chaîne cinématique, partant de la boîte de vitesses, menant à un premier essieu du véhicule et une seconde chaîne cinématique, partant de la première chaîne cinématique, menant au second essieu du véhicule, caractérisé en ce que la seconde chaîne cinématique (8) peut être montée, par un système de verrouillage de toutes les roues (10), prêt a fonctionner en permanence, en fonction de la différence de vitesse de rotation entre un arbre moteur (4) et un arbre de sortie (13), le système de verrouillage de toutes les roues (10) pouvant être bloqué par un accouplement de blocage (43) commandable, de manière qu'avec la seconde chaîne cinématique (8), le second essieu (1) du véhicule soit entraîné rigidement et que dans la première chaîne cinématique (6) un accouplement de séparation (25) commandable soit inséré, conformément au flux des forces, derrière le point de départ (7) de la seconde chaîne cinématique (8).

2. Dispositif de transmision intégrale pour un véhicule automobile, comportant une première chaîne cinématique, partant de la boîte de vitesses, menant à un premier essieu du véhicule et une seconde chaîne cinématique, partant de la première chaîne cinématique, menant au second essieu du véhicule, caractérisé en ce que la première chaîne cinématique est configurée rigide sous la forme d'un arbre moteur (57) continu, et en ce que dans la seconde chaîne cinématique (8) se situe l'un derrière l'autre un accouplement de séparation (25) commandable et un système de verrouillage de toutes les roues, prêt a fonctionner en permanence, par lequel le second essieu du véhicule peut être monté dans la chaîne en fonction de la différence de vitesse de rotation entre un arbre moteur 4 et un arbre de sortie (13), le système de verrouillage de toutes les roues (10) pouvant être bloqué par un accouplement de blocage (43) commandable, de manière qu'avec la seconde chaîne cinématique (8), le second essieu (1) du véhicule soit entraîné rigidement.

3. Dispositif de transmission intégrale pour un véhicule automobile selon les revendications 1 ou 2, caractérisé en ce que pour l'accouplement de séparation (25) et l'accouplement de blocage (43) sont prévus des dispositifs d'actionnement (48, 49) hydrauliques, qui peuvent être commandés de l'extérieur en fonction de grandeurs caractéristiques du véhicule automobile.

4. Dispositif de transmission intégrale pour un véhicule automobile selon la revendication 3, caractérisé en ce que l'accouplement de séparation (25) est ouvert sans pression, l'accouplement de blocage (43) est fermé sans pression.

5. Dispositif de transmission intégrale pour un véhicule automobile selon la revendication 1, caractérisé en ce que le système de verrouillage (10) avec l'accouplement de blocage (43), l'accouplement de séparation (25) et le système hydraulique pour les dispositifs d'actionnement (48, 49) sont montés coaxialement les uns par rapport aux autres dans cet ordre et sont entourés par un boîtier fixe.

6. Dispositif de transmission intégrale pour un véhicule automobile selon les revendications 1 et 2, caractérisé en ce que le système de verrouillage est constitué d'un engrenage planétaire (10) assurant la transmission directe d'un arbre moteur (4) à un arbre de sortie (13) et d'un dispositif de freinage (38), agissant sur son portesatellites (37), le rapport entre les roues dentées pour la transmission directe de l'arbre moteur (4) a l'arbre de sortie (13) étant légèrement différent de 1 : 1, mais le rapport de transmission de l'arbre moteur (4) au porte-satellites (37) étant nettement supérieur.

7. Dispositif de transmission intégrale pour un véhicule automobile selon la revendication 6, caractérisé en ce que l'engrenage planétaire (10) est formé par une roue planétaire (9) montée solidaire en rotation sur un arbre moteur (4) central, une roue planétaire de sortie (11) réalisée d'une seule pièce avec un arbre de sortie (13) creux, monté a côté de la première roue sur l'arbre moteur (4), présentant un nombre de dents inférieur ou supérieur ainsi que par des roues satellites (35) qui sont en prise en même temps avec la roue planétaire d'entrée et la roue planétaire de sortie et sont montées sur des axes d'appui (36) du porte-satellites (37).

8. Dispositif de transmission intégrale pour un véhicule automobile selon les revendications 3 à 5, caractérisé en ce que l'accouplement de blocage (43) est constitué de plusieurs lamelles intérieures (44) et de lamelles extérieures (45) pouvant être reliées entre elles par friction, les lamelles extérieures (45) étant solidaires en rotation et déplaçables longitudinalement sur le boîtier d'accouplement (24), les lamelles intérieures (44), sur l'axe d'appui (36) du porte-satellites (37).

9. Dispositif de transmission intégrale pour un véhicule automobile selon les revendications 1 à 5, caractérisé en ce que l'accouplement de séparation (25) est fait de plusieurs lamelles intérieures (27) et de lamelles extérieures (26) pouvant être reliées entre elles par friction, les lamelles extérieures (26) étant fixes en rotation et déplaçables longitudinalement sur un boîtier d'accouplement (24), relié a l'arbre moteur (4), les lamelles intérieures (27) étant fixes en rotation et déplaçables longitudinalement par rapport a l'arbre de sortie (28) menant a l'essieu arrière (5).

10. Dispositif de transmission intégrale pour un véhicule automobile selon les revendications 1 ou 2, caractérisé en ce que les chaînes cinématiques (8 ou 6) vers l'essieu avant (1) ou l'essieu arrière (5) présentent des rapports de transmission d'ensemble légèrement différents.
